(19)

Europäisches
Patentamt
European
Patent Office
Office européen
des brevets

(11) **EP 2 053 890 A2**

(12) **EUROPEAN PATENT APPLICATION**

(43) Date of publication:
**29.04.2009 Bulletin 2009/18**

(51) Int Cl.:
**H04W 52/02** $^{(2009.01)}$

(21) Application number: **08167463.2**

(22) Date of filing: **23.10.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **26.10.2007 JP 2007278887**

(71) Applicant: **Fujitsu Limited
Kawasaki-shi, Kanagawa 211-8588 (JP)**

(72) Inventors:
• **Obuchi, Kazuhisa,
c/o Fujitsu Limited
Kawasaki-shi,
Kanagawa 211-8588 (JP)**
• **Kawasaki, Yoshihiro,
c/o Fujitsu Limited
Kawasaki-shi,
Kanagawa 211-8588 (JP)**

• **Tajima, Yoshiharu,
c/o Fujitsu Limited
Kawasaki-shi,
Kanagawa 211-8588 (JP)**
• **Ohta, Yoshiaki,
c/o Fujitsu Limited
Kawasaki-shi,
Kanagawa 211-8588 (JP)**
• **Tanaka, Yoshinori,
c/o Fujitsu Limited
Kawasaki-shi,
Kanagawa 211-8588 (JP)**

(74) Representative: **Wilding, Frances Ward
Haseltine Lake
Lincoln House
300 High Holborn
London WC1V 7JH (GB)**

(54) **Radio communication devices and radio communication methods**

(57)    A control method in a radio communication system wherein a radio communication device transmits, to another radio communication device, a predetermined signal that gives an opportunity to the other radio communication device to detect a change of a rule to be applied from a first rule to a second rule. The method includes transmitting, from the radio communication device, a paging signal at a timing specified by the first rule and a timing specified by the second rule and receiving, by the other radio communication device, the paging signal at the timing specified by the first rule when the predetermined signal was transmitted by the radio communication device to the other radio communication device but not received by the other radio communication device.

FIG. 1

EP 2 053 890 A2

**Description**

FIELD

The embodiments discussed herein are related to a radio communication device and a control method.

BACKGROUND

A mobile communication system is given as an example of a radio communication system performing intermittent reception.

In general, the mobile communication system includes a base station and a mobile station, and radio communication is performed between the base station and the mobile station. The mobile station can attempt continuous reception processing in order to receive any notification that is transmitted from the base station. However, intermittent reception may be performed in order to reduce reception processing loads or the like. That is, the mobile station performs intermittent reception processing at a timing (e.g., a predetermined period) that is specified by a prescribed rule. The base station recognizes that the mobile station performs the intermittent reception processing at the timing (the predetermined period) specified by the prescribed rule. To transmit any notification to the mobile station, the base station performs notification (transmission) at a time when the mobile station is expected to perform reception processing during the intermittent receive timing.

Accordingly, by both the base station and the mobile station performing intermittent reception processing, the mobile station can receive notifications from the base station without the mobile station having to perform continuous reception processing in order to receive unexpected notifications.

The base station can notify the mobile station of this predetermined period by notification information. Although the period itself can be notified (transmitted), the base station may instead transmit one or a plurality of parameters that is necessary information to specify the period to the mobile station and allow the mobile station to detect the respective predetermined periods by the parameter(s).

Description is made of an example of a specifying method of a period by using W-CDMA as an example of a mobile communication system.

In W-CDMA, a frame number (SFN: system frame number) is given to a radio frame, and the mobile station performs intermittent reception processing with respect to a radio frame corresponding to a frame number specified by the following formula.

$$\text{Cell SFN} = [\text{IMSI mod (DRX cycle length div PBP)}] * \text{PBP}$$
$$+ \, n * \text{DRX cycle length} + \text{Frame Offset}$$
$$= [\text{IMSI mod (DRX cycle length)}] + n * \text{DRX cycle}$$
$$\text{length} \, (n = 0, 1, 2\ldots \, \text{(the range in which SFN is equal to or less}$$
$$\text{than the largest value))} \,.$$

In the formula, an IMSI (International Mobile Subscriber Identity) is a unique ID between mobile stations and is stored in each mobile station as unique information of each mobile station. Further, PBP (Paging Block Periodicity) can be different values depending on a mode, but becomes 1 in the case of a FDD mode (Frequency Division Duplex, the FDD mode is assumed in this case). An Np and a DRX cycle length are parameters that are notified from the base station through a BCH (Broadcast channel). A frame offset can be different values depending on the mode, but becomes 0 in the case of the FDD mode (the FDD mode is assumed in this case).

Therefore, the mobile station attempts to receive the radio frame having the SFN that is specified by the above mentioned formula. In the case of W-CDMA, however, the mobile station first receives a PICH (Paging Indicator Channel) to determine the existence or nonexistence of a paging signal. If the existence of the paging signal is detected, reception of a PCH (Paging channel) transmitted later by a prescribed frame is performed (receiving the paging signal used for notification of incoming traffic and a notification of a change of the period). In this case, a plurality of PICHs is included in a radio frame. Thus, the mobile station specifies what number PICH is to be received.

Specifically, of the plurality of PICHs allocated in the radio frame, a P-th PICH that is specified by the following formula is received by the mobile station.

$$PI = DRX \; Index \; mod \; Np = (IMSI \; div \; 8192) \; mod \; Np$$

$$p = \left( PI + \left\lfloor \left( (18 \times (SFN + \lfloor SFN/8 \rfloor + \lfloor SFN/64 \rfloor + \lfloor SFN/512 \rfloor)) \mod 144 \right) \times \frac{N}{144} \right\rfloor \right) \mod N$$

As seen in the formula, P varies depending on the SFN. Thus, the PICH that has to be received in the radio frame varies depending on the number of the received radio frame.

However, it is not considered as changing the intermittent reception period and does not introduce a scheme to solve any of the problems which may occur do to a change in the intermittent reception period.

SUMMARY

It is desirable to introduce a change of the intermittent reception period.

It is also desirable to reduce problems that may occur when the period of the intermittent reception is changed.

According to an embodiment of an aspect of the present invention, there is provided a radio communication device that performs intermittent reception according to a timing specified by a first rule, wherein the radio communication device transmits, to another radio communication device, a predetermined signal that gives an opportunity to the other radio communication device to detect a change of a rule to be applied from the first rule to a second rule, includes a transmitting unit that transmits a radio signal to the other radio communication device and a control unit that controls the transmitting unit to transmit a paging signal, when the paging signal is transmitted after the predetermined signal is transmitted, in order to transmit the paging signal at a timing specified by the first rule and a timing specified by the second rule.

According to an embodiment of an aspect of the present invention, there is provided a control method in a radio communication system wherein a radio communication device transmits, to another radio communication device, a predetermined signal that gives an opportunity to the other radio communication device to detect a change of a rule to be applied from a first rule to a second rule, includes transmitting, from the radio communication device, a paging signal at a timing specified by the first rule and a timing specified by the second rule and receiving, by the other radio communication device, the paging signal at the timing specified by the first rule when the predetermined signal was transmitted by the radio communication device to the other radio communication device but not received by the other radio communication device.

According to an embodiment of an aspect of the present invention, there is provided a radio communication device which transmits a predetermined signal that gives an opportunity to another radio communication device to detect a change of a rule to be applied from a first rule to a second rule, wherein the other radio communication device performs intermittent reception according to a timing specified by the first rule, includes a transmitting unit that transmits a radio signal to the other radio communication device and a control unit that controls the transmitting unit to transmit, at a timing specified by the first rule, a signal by which the other radio communication device can confirm that the first rule was not changed to another rule.

According to an embodiment of an aspect of the present invention, there is provided a radio communication device that intermittently receives a radio signal, transmitted from another radio communication device that transmits a paging signal at a timing specified by a first rule, according to the timing specified by the first rule, includes a receiving unit that receives a signal transmitted from the other radio communication device and a control unit that control the receiving unit to receive a predetermined signal, transmitted from the other radio communication device, that enables to detect that the first rule was not changed, and controls the receiving unit to receive information used to specify a rule, applied by the other radio communication device, as a transmission timing of a paging signal according to a reception state of the predetermined signal.

According to an embodiment of an aspect of the present invention, there is provided a control method in a radio communication system in which a radio signal transmitted from a first radio communication device that transmits a paging signal at a timing specified by a first rule is intermittently received by a second radio communication device according to the timing specified by the first rule, includes receiving a predetermined signal, transmitted from the first radio communication device, by the second radio communication device at a timing determined by the first rule, wherein the predetermined signal is used to detect that the first rule was not changed and receiving information, which is used to specify a rule applied by the first radio communication device for a transmission timing of a paging signal, by the second radio communication device in accordance with a reception state of the predetermined signal.

Advantages of embodiments of the present invention may be realized and attained by means of the elements and combinations set out in the claims.

It is to be understood that both the foregoing general description and the following detailed description are exemplary and explanatory and are not restrictive of the invention, as claimed.

BRIEF DESCRIPTION OF DRAWINGS

FIG.1 depicts a processing flow for changing a rule;
FIG.2 depicts a flow of the case when a mobile station misses an opportunity of detection of a rule change;
FIG.3 depicts a configuration of a base station as an example of a radio communication device;
FIG.4 depicts a configuration of a mobile station as an example of a radio communication device;
FIG.5 depicts transmission and reception processing between the base station and the mobile station when the rule is changed;
FIG.6 depicts a configuration of the base station as an example of the radio communication device;
FIG.7 depicts a configuration of the mobile station as an example of the radio communication device; and
FIG.8 depicts transmission and reception processing between the base station and the mobile station in the case when the rule is changed.

DESCRIPTION OF EMBODIMENTS

The subject matter that is regarded as the invention is particularly pointed out and distinctly claimed in the claims at the conclusion of the specification. The foregoing and other objects, features and advantages of the invention will be apparent from the following detailed description taken in conjunction with the accompanying drawings.

As described above, the mobile station can perform the intermittent reception at a timing (e.g., the predetermined period) specified by a prescribed rule. However, it is assumed that the rule (e.g., the period) may need to be changed, for example according to the situation at the base station side. For example, the period may be changed according to incoming traffic. If the incoming traffic is higher than a prescribed reference, the period is made short to increase chances of notification to the mobile station. If the reception traffic is lower than the prescribed reference, the period is made longer, thus reducing the periods for allowing notifications to be sent to the mobile station, thereby decreasing the reception processing loads.

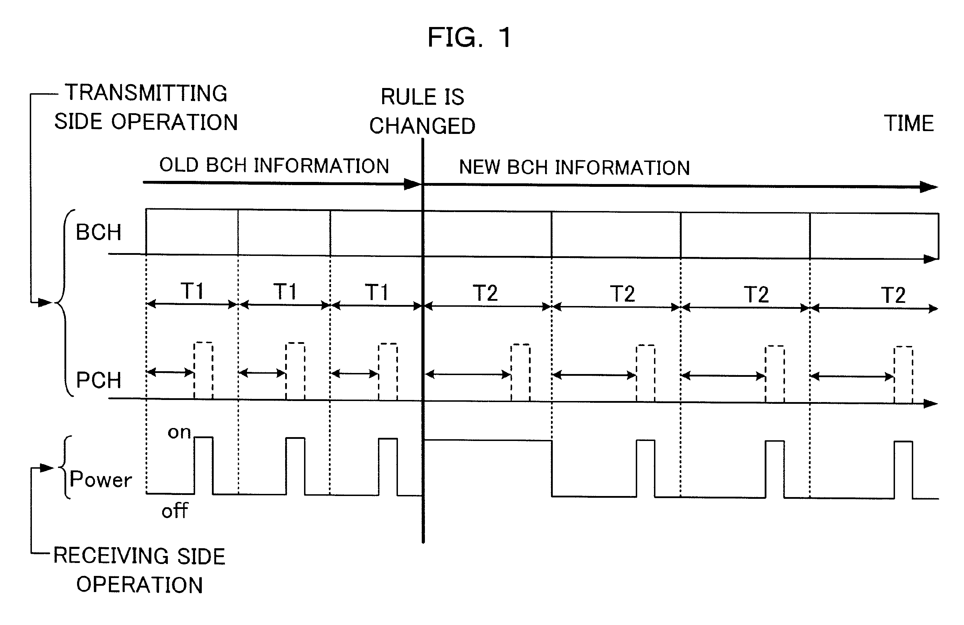

FIG. 1 depicts a processing flow for changing the rule (e.g., the period).

The mobile station first receives a synchronizing signal transmitted from the base station to establish synchronization. By receiving the notification information (BCH) transmitted from the base station, the mobile station obtains the parameter (the rule data) (the Np and the DRX cycle length in W-CDMA) to specify the rule necessary to specify timing to perform intermittent reception (the intermittent reception of the PCH in this case).

In the example of FIG.1, a period T1 is specified by the parameter as a period in which the intermittent reception is performed. The mobile station performs the intermittent reception at the timing shifted from the top of the radio frame by a prescribed offset. In this example, the mobile station reduces power consumption by turning on the power according to the period and turning off the power after the reception of the PCH as described in FIG.1.

Thus, the base station transmits, to the mobile station, a parameter that can specify a first rule (a period T1).

Next, it is assumed that the base station changes the intermittent reception period of the mobile station.

To change the rule, the base station transmits, to the mobile station, a parameter that can specify a second rule (a period T2) (T2>T1 in this example) that changes the first rule. Therefore, as described in the Fig. 1, contents of the notification information are changed before and after changing the period.

Since the intermittent reception is operating by the first rule (the period T1), the mobile station needs to recognize that the base station switches to the second rule (the period T2).

Therefore, before changing the rule (the period), the base station notifies the mobile station that the rule (the period) is changed or the BCH is to be received by using the PCH intermittently received by the first rule (the period T1) by the mobile station. Then the mobile station detects that the BCH has to be detected by receiving the PCH. When the mobile station receives the BCH by this notification, the parameter (second rule data) necessary to specify a new second rule (a period) is received. Thus, the mobile station detects the new second rule (a period T2). Therefore, the intermittent reception period is switched to the period T2 according to switching the period in the base station. Later, as well, the notifications from the base station can be received within the new intermittent reception period.

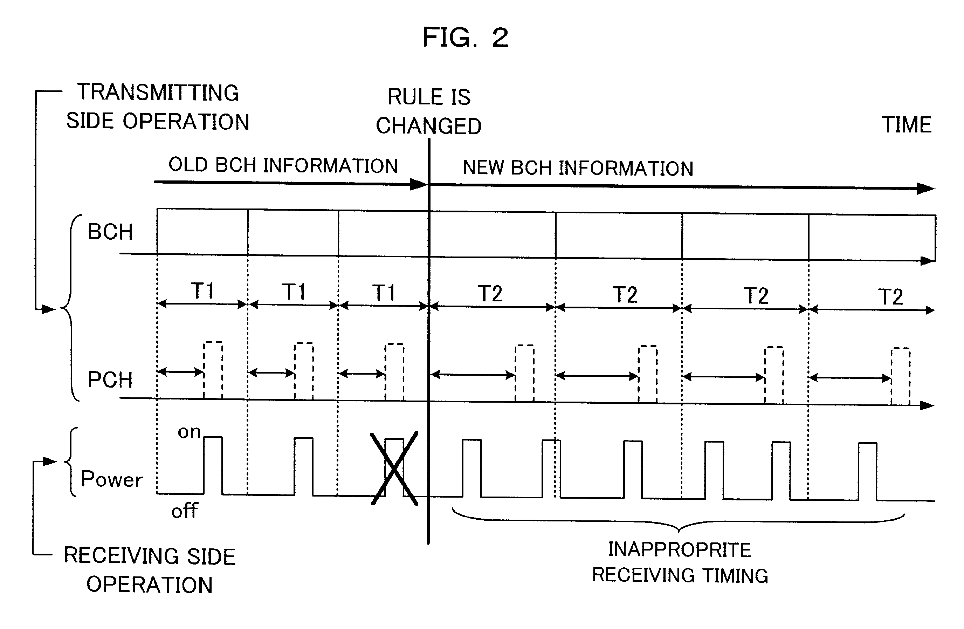

As described in FIG. 2, however, if the mobile station fails to receive the notification indicating that the rule (the period) is changed or that the BCH is to be received, the mobile station does not detect that the rule (the period) is changed. Thus, even after the rule (the period) is changed by the base station, the intermittent reception processing in the mobile station is continued by the first rule (the period T1) that has not been changed, so that the PCH transmitted from the base station by the new second rule is not received. As a result, the notifications from the base station are not received.

[a] First approach

In this embodiment, a radio communication system is utilized, wherein, a radio communication device (e.g., a base station) transmits a predetermined signal that gives an opportunity to another radio communication device (e.g., a mobile station) for detection of a rule change from a first rule to a second rule, where the other radio communication device (e.g., a mobile station) performs intermittent reception according to timings specified by the first rule or the second rule. After the predetermined signal is transmitted, the radio communication device (e.g., a base station) transmits a paging signal at a timing specified by the first rule and a timing specified by the second rule. If the other radio communication device (e. g. , the mobile station) does not receive the predetermined signal, the other radio communication device (e. g. , the mobile station) will still receives the paging signal at the timing specified by the first rule.

This allows the other radio communication device (e.g., the mobile station) to receive the paging signal by following the rule that has not been changed (first rule) even though the radio communication device fails to receive the predetermined signal for detecting the change to the second rule.

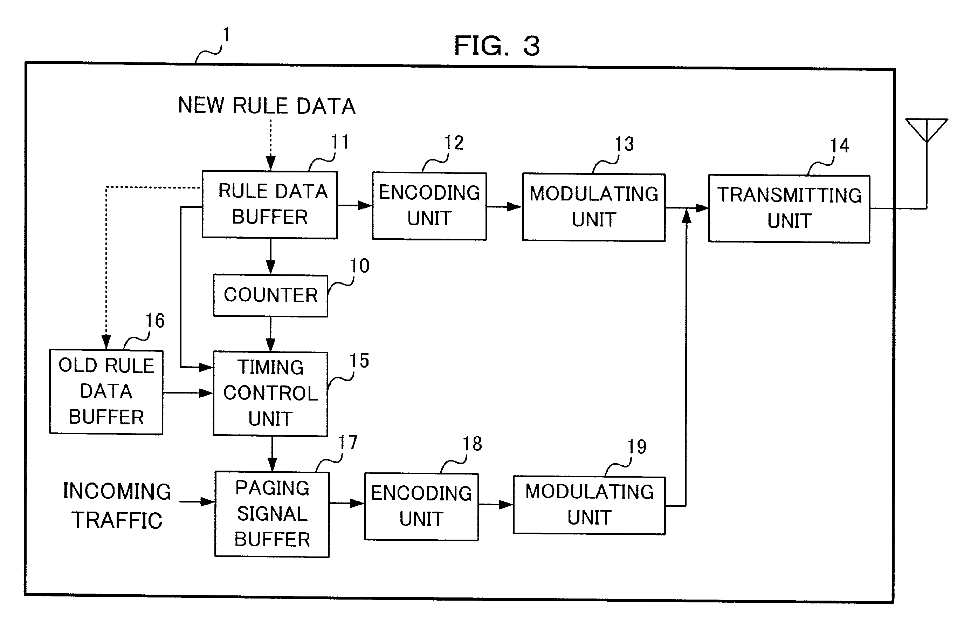

The first embodiment is described below in detail by using FIG.3 to FIG.5.

"Radio communication device (e.g., the base station)"

FIG.3 depicts a configuration of the case of using a base station 1 in a mobile communication system as a radio communication device (a first radio communication device).

The base station 1 includes a counter 10, a rule data buffer 11, an encoding unit 12, a modulating unit 13, a transmitting unit 14, a timing control unit 15, an old rule data buffer 16, a paging signal buffer 17, an encoding unit 18, and a modulating unit 19.

The base station 1 includes the counter 10 used as a timing standard. Based on a timing signal given from the counter 10, the base station 1 transmits rule data stored in the rule data buffer 11 and the paging signal stored in the paging signal buffer 17.

That is, the base station 1 encodes the rule data used to specify a rule that is currently used by the encoding unit 12(e.g., error correction encoder). Then the modulating unit 13 performs modulating processing such as QPSK and QAM on the rule data, and the transmitting unit 14 performs processing necessary to transmit a radio signal such as amplification. Then the rule data is transmitted from an antenna.

The rule data is information that is used to specify a rule applied to transmission timing for the paging signal transmitted by the base station 1. Information that directly indicates the transmission timing of the paging signal (e.g., a radio frame number), one or a plurality of parameters used to calculate the transmission timing of the paging signal (e.g., such as Np and DRX cycle length in the case of W-CDMA), a transmission period, and offset information or the like are listed as examples of the rule data.

Preferably, the transmitting unit 14 repeatedly transmits (with a predetermined period) the rule data that is used to specify the currently used rule. If the rule data is switched to new rule data, the new rule data (second rule data) is stored in the rule data buffer 11. After that, the new rule data is transmitted from the base station 1.

On the other hand, the timing control unit 15 controls the paging signal buffer unit 17, the encoding unit 18, the modulating unit 19, the transmitting unit 14 and the like in order to transmit the paging signal stored in the paging signal buffer 17 at the timing specified by the applied rule (the rule specified by the currently transmitted rule data), namely at the timing when it is possible to transmit the paging signal to the mobile station.

The paging signal buffer 17 stores the paging signal used to notify the mobile station of incoming traffic to the mobile station. This paging signal may be given from the side of a higher layer network depending on the incoming traffic.

For example, if the timing when a paging signal can be transmitted to a certain mobile station is an even numbered frame according to the first rule, the paging signal is transmitted to the mobile station from the transmitting unit 14 in the even numbered frame under control of the timing control unit 15. Obviously, if there is no paging signal, the paging signal does not need to be transmitted even at the timing when the paging signal can be transmitted. To change the rule data, a change notification is given to the timing control unit 15 from the rule data buffer 11. Then the timing control unit 15 stores a predetermined signal (C) in the paging signal buffer 17.

The predetermined signal (C) is, for example, a signal that gives an opportunity to the mobile station to detect that the rule is changed. A signal notifying the mobile station that the rule is changed, the changed rule data, and a receiving instruction of notification information are listed as examples of the signal that gives the opportunity. It is preferable that the predetermined signal (C) is transmitted to each mobile station in a radio area of the base station at each intermittent reception timing before the rule data to be broadcasted is changed.

By setting the new rule data to the rule data buffer 11, the base station 1 switches the rule data to be broadcasted to the new rule data. On the other side, the rule data that was previously applied is stored in the old rule data buffer 16.

As described above, the predetermined signal (C) is transmitted to the mobile station according to the change of the rule data. After that, when transmitting the paging signal, the timing control unit 15 controls each unit (the paging signal buffer 17, the transmitting unit 14 or the like) in order to transmit the paging signal not only at the transmission timing specified by the new rule data but also at the transmission timing specified by the old rule data.

Further, after the predetermined signal (C) is transmitted, if there is no incoming traffic to the mobile station and the paging signal does not need to be transmitted, the predetermined signal (C) may be retransmitted at the timing specified by the old rule. The content of the signal may not be exactly the same as that of the predetermined signal (C) transmitted earlier. The content of the signal may be different. A signal that gives an opportunity to the mobile station to detect that the rule is changed is used for the retransmission.

After the predetermined signal (C) is transmitted, if there is no incoming traffic to the mobile station and the paging signal does not need to be transmitted, it is applicable that the predetermined signal (C) may not be transmitted to a mobile station 2 at the timing specified by the new rule.

"Radio communication device (e.g., the mobile station)"

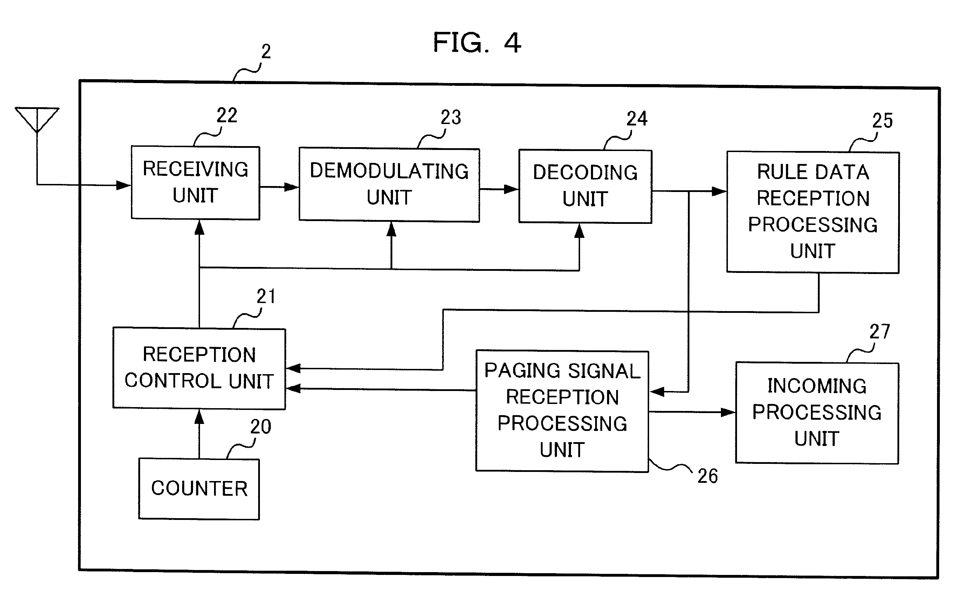

FIG.4 depicts a configuration of the case when the mobile station 2 in the mobile communication system is used as a radio communication device (a second radio communication device).

The mobile station 2 includes a counter 20, a reception control unit 21, a receiving unit 22, a demodulating unit 23, a decoding unit 24, a rule data reception processing unit 25, a paging signal reception processing unit 26, and an incoming processing unit 27.

The mobile station 2 includes the counter 20 used as a timing standard. Based on the timing signal given from the counter 20, the reception control unit 21 controls the receiving unit 22 in order to perform the intermittent reception processing. Reception timing is timing that is specified by the rule data obtained from the base station 1 by the rule data reception processing unit 25. The rule data can be transmitted as broadcast information from the base station 1.

The receiving unit 22 receives a radio signal transmitted from the base station 1 intermittently under the control of the reception control unit 21 and gives the radio signal to the demodulating unit 23. The demodulating unit 23 performs modulation processing on the given reception result, and gives the modulation result to the decoding unit 24. After the data is decoded by the decoding unit 24 and is given processing such as error correcting decoding, the data is given to the rule data reception processing unit 25 and to the paging signal reception processing unit 26, respectively, according to a type of the data.

That is, if the rule data is received from the base station 1, the rule data is given to the rule data reception processing unit 25, and the applied rule is specified. For example, a parameter (a period, an offset or the like), used for a calculation to specify the intermittent reception timings, is given as rule data to the rule data reception processing unit 25.

The data received by the intermittent reception is given to the paging signal reception processing unit 26. If the data is a paging signal, the data is given to the incoming processing unit 27 and communication with the base station 1 necessary for incoming processing is performed.

The data received by the intermittent reception is the predetermined signal (C), the reception control unit 21 is controlled and the receiving unit 22 is instructed to receive a channel (e.g., a BCH) in which the rule data is transmitted. For example, when the base station 1 transmits the rule data in a prescribed radio frame, the receiving unit 22 or the like are controlled to receive the radio frame, and the received new rule data is given to the rule data reception processing unit 25. Therefore, after that, reception of the paging signal is performed at the timing specified by the new rule specified based on the new rule data.

"Control method related to the rule change"

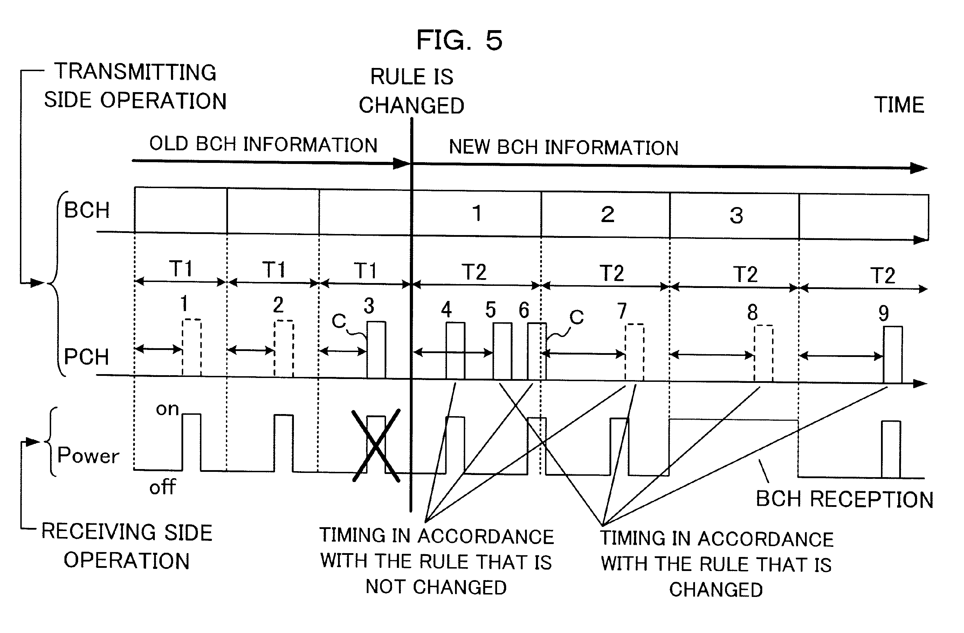

Next, by using FIG. 5, description is made of transmission and reception processing between the base station 1 and the mobile station 2 of the case when the rule to be applied is changed from the old rule (specified by the first rule data) to the new rule (specified by the second rule data).

First, the transmitting unit 14 of the base station 1 transmits the first rule data that is set to the rule data buffer 11. In this case, the rule data is transmitted by using a broadcast channel (BCH) to notify the mobile station in the radio area formed by the base station 1.

In this case, the timing for transmitting the paging signal with respect to a certain mobile station is assumed to be the timing that has an offset depicted in figure 5 and comes in each period T1 based on the first rule.

Upon establishing synchronization with this base station 1 and receiving the first rule data through the BCH by the rule data reception processing unit 25, the mobile station 2 indicates the timing in accordance with the first rule data to the reception control unit 21. Therefore, the reception control unit 21 performs the intermittent reception by controlling the receiving unit 22 to the intermittent transmission timing of the paging signal (PCH) as depicted in the figures.

In this example, electric power is supplied to the receiving unit (may include the modulating unit and the decoding unit) during the period in which the reception is performed, and the electric power is shut down during other periods (excluding special reception periods such as a reception period of the BCH). Obviously, when the radio communication system in the present embodiment is applied to the mobile communication system corresponding to a cellar system, the receiving unit 22 can be controlled to receive a radio signal from other base stations during the period in which no intermittent reception is performed.

In the transmission of the PCH, as depicted in figure 5, the timing depicted with a solid line indicates that the paging signal and the predetermined signal (C) are actually transmitted.

As depicted in figure 5, at the first timing and the second timing of the transmission timing of the PCH specified by the first rule, the paging signal is not transmitted because there is no incoming traffic for the mobile station 2.

Now assuming in base station 1 the rule needs to be changed, the rule data buffer 11 stores the new rule data (the second rule data), and the old rule data (the first rule data) is stored in the old rule data buffer 16.

Then the timing control unit 15 gives the predetermined signal (C) to the paging signal buffer 17, and makes the paging signal buffer 17 transmit the predetermined signal (C) through the encoding unit 18, the modulating unit 19, and the transmitting unit 14. The transmission timing of the predetermined signal (C) corresponds to the transmission timing of the paging signal in accordance with the first rule.

Normally, by the intermittent reception control performed by the reception control unit 21 of the mobile station 2, the predetermined signal (C) is received by the receiving unit 22 and is detected by the paging signal reception processing unit 26. The reception control unit 21 makes the receiving unit 22 perform the reception processing of the BHC in order to receive the rule data (new rule data).

In this example, however, it is assumed that the receiving unit 22 fails to receive the predetermined signal (C) because of, for example, the effect of a radio environment. That is, it is assumed that the receiving unit 22 fails to receive the radio signal at the 3rd timing of the PCH as shown in FIG.5.

After that, the base station 1 starts to transmit the new rule data (the second rule data) stored in the rule data buffer 11, and the timing control unit 15 controls the transmitting unit 14 or the like to transmit the paging signal from the paging signal buffer 17 at the timing in accordance with the second rule (new rule). The 5th, 7th, 8th, and 9th PCHs in FIG. 5 correspond to this timing.

However, in the present embodiment, the transmission to the mobile station is performed also in the 4th and 6th PCHs specified by the first rule (old rule).

In this example, since there is incoming traffic to the mobile station 2 after the rule is changed, the paging signal is transmitted to the mobile station 2 both in the 4th and 5th PCHs.

Accordingly, even though the reception of the predetermined signal (C: 3th PCH) is a failure, the mobile station 2 can perform the incoming processing by receiving the paging signal transmitted at a first timing (4th PCH) of the unchanged rule (old rule). It is apparent that if the reception of the predetermined signal (C: 3th PCH) is a success, the incoming processing can be performed by receiving the paging signal at a second timing (5th PCH) of the changed rule. The transmission of the paging signal in accordance with both the old and new rules as described above can be performed throughout a predetermined period, a predetermined number (one time or more) or the like after the rule is changed.

In this example, the mobile station 2 succeeds in receiving the paging signal transmitted at the timing of the 4th PCH.

Then the base station 1 retransmits the predetermined signal (C) as depicted in the 6th PCH in the figure when there is no incoming traffic to the mobile station 2 and the paging signal does not need to be transmitted. As a result, it is possible to give an opportunity to detect the further rule change with respect to the mobile station 2 that missed the opportunity (C: 3th PCH) to detect the rule change.

Therefore, the paging signal reception processing unit 26 of the mobile station 2 that receives the retransmitted predetermined signal (C: 6th PCH) recognizes that the rule is changed, and controls the receiving unit 22 to receive the BCH in a third radio frame (if possible, second radio frame) of the changed rule. This makes it possible to receive a parameter necessary to specify the new rule (the second rule data) and to give the parameter to the rule data reception processing unit 25.

After that, the reception control unit 21 of the mobile station 2 performs the intermittent reception at the transmission timing of the paging signal specified by the second rule data, and does not perform the intermittent reception at the transmission timing of the paging signal specified by the first rule data.

Therefore, it is possible to receive the paging signal at the 9th timing of the PCH depicted in the figure (the timing in accordance with the second rule).

As described above, according to the present embodiment, it is possible to reduce problems that may occur when the period of the intermittent reception is changed (such as the problem that the paging signal cannot be received).

By including the predetermined signal (C) in the paging signal transmitted at the 4th timing of the PCH, it is possible to notify the mobile station 2 that the rule is changed and it is necessary to receive the BCH in the case of transmitting the paging signal.

[b] Second approach

In this embodiment, when radio signals transmitted from a first radio communication device (e.g., a base station) transmitting a paging signal at a timing specified by a first rule is intermittently received by a second radio communication device (e.g., a mobile station) according to a timing specified by the first rule, the second radio communication device (e. g. , the mobile station) receives a predetermined signal (M) that can specify that the rule was not changed, transmitted by the first radio communication device, at the timing specified by the first rule in order to receive information that can be used to specify a rule applied as a transmission timing of the paging signal by the first radio communication device (e.g., the base station) based on a reception condition of the predetermined signal (M).

Accordingly, when the first radio communication device (e.g., the mobile station) changes the rule that defines the timing to perform the reception of the paging signal, the predetermined signal (M) cannot be received. Thus, the second radio communication device (e. g. , the base station) assumes that the rule is changed, and it is possible to specify a rule that is applied as the transmission timing of the paging signal.

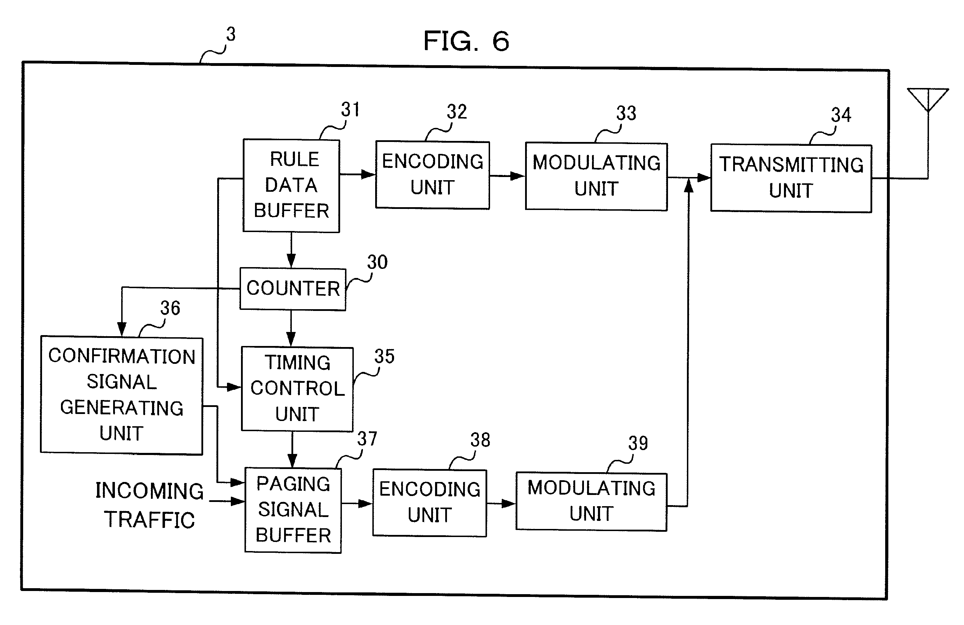

Detailed description is made below of the second embodiment by using FIG.6 to FIG.8.

·Radio communication device (e.g., a base station)

FIG. 6 depicts a configuration of the radio communication device of the case when a base station 3 in the mobile communication system is used as a radio communication device (a first radio communication device).

The base station 3 includes a counter 30, a rule data buffer 31, an encoding unit 32, a modulating unit 33, a transmitting unit 34, a timing control unit 35, a confirmation signal generating unit 36, a paging signal buffer 37, an encoding unit 38, and a modulating unit 39.

The base station 3 includes the counter 30 used as a timing standard. Based on the timing signal given from the counter 30, the base station 3 transmits the currently applied rule data stored in the rule data buffer 31 and the paging signal stored in the paging signal buffer 37.

That is, the base station 3 encodes the rule data that is information used to specify the currently applied rule by the encoding unit 32 (e.g., error correction encoder), performs modulation processing such as QPSK, QAM or the like in the modulating unit 33 on the rule data, and performs amplification processing or the like in the transmitting unit 34. Then the rule data is transmitted from the antenna.

The rule data is the information that is used to specify the rule that the base station applies as the transmission timing of the paging signal. Examples of the rule data are information that directly indicates the transmission timing of the paging signal, one or a plurality of parameters used for calculation to obtain the transmission timing of the paging signal (e.g., such as Np and DRX cycle length in the case of the W-CDMA), a transmission period of the paging signal, an offset information or the like.

Preferably, the transmitting unit 34 repeatedly transmits the rule data that is used to specify the currently applied rule. If the rule data is switched to the new rule data, the new rule data (the second rule data) is stored in the rule data buffer 31. After that, the new rule data is transmitted from the base station 3.

On the other hand, the timing control unit 35 controls the paging signal buffer unit 37, the encoding unit 38, the modulating unit 39, the transmitting unit 34 and the like to transmit the paging signal stored in the paging signal buffer unit 37 at the timing, specified by the applied rule, when a paging signal can be transmitted to the mobile station.

At this time, the paging signal buffer unit 37 stores the paging signal used to notify the mobile station that there is incoming traffic to the mobile station. This paging signal is given from the side of the higher layer network depending on the incoming traffic.

For example, if the timing when the paging signal can be transmitted with respect to a certain mobile station is an even numbered frame based on the first rule, the paging signal with respect to this mobile station is transmitted from the transmitting unit 34 in the even numbered frame under control of the timing control unit 35. Obviously, if there is no paging signal, the paging signal does not have to be transmitted even at the timing when the paging signal can be transmitted. When the rule data is changed, a change notification is given to the timing control unit 35 from the rule data buffer 31. The timing control unit 35 stores the predetermined signal (C) in the paging signal buffer 37.

Examples of the predetermined signal are a signal that gives an opportunity to the mobile station to detect the rule change, such as a signal that notifies the mobile station that the rule is changed, rule data of the changed rule, reception instruction of notification information. It is preferable that this predetermined signal (C) is transmitted to each mobile station in the radio area of the base station at each intermittent reception timing before the rule data to be notified is changed.

The base station 3 switches the rule data to be notified to the new rule data by setting the new rule data to the rule data buffer 31.

As described above, the predetermined signal (C) is then transmitted to the mobile station according to the change of the rule data. After that, when the paging signal is transmitted, the timing control unit 35 controls each unit (the paging signal buffer 37, the transmitting unit 34 and the like) in order to transmit the paging signal at the transmission timing specified by the new rule data (the paging signal is not transmitted at the timing specified by the old rule data).

Further, the base station 3 includes the confirmation signal generating unit 36. Even when a paging signal is not transmitted, the base station 3 transmits, at the timing specified by the currently applied rule, the predetermined signal (M) (a confirmation signal) by which the mobile station can detect that the rule has not changed.

When the rule is switched, the base station 3 transmits the predetermined signal (M) (the confirmation signal) at the timing when the paging signal is transmitted in accordance with the changed rule.

The predetermined signal (M) may be transmitted in accordance with a predetermined period L or one time within a number P of paging signal transmissions (P is one or more). In this example, the predetermined period L is applied. When the predetermined signal (M) competes with the paging signal, the paging signal may take priority and the predetermined signal (M) may not be transmitted.

"Radio communication device (e.g., a mobile station) "

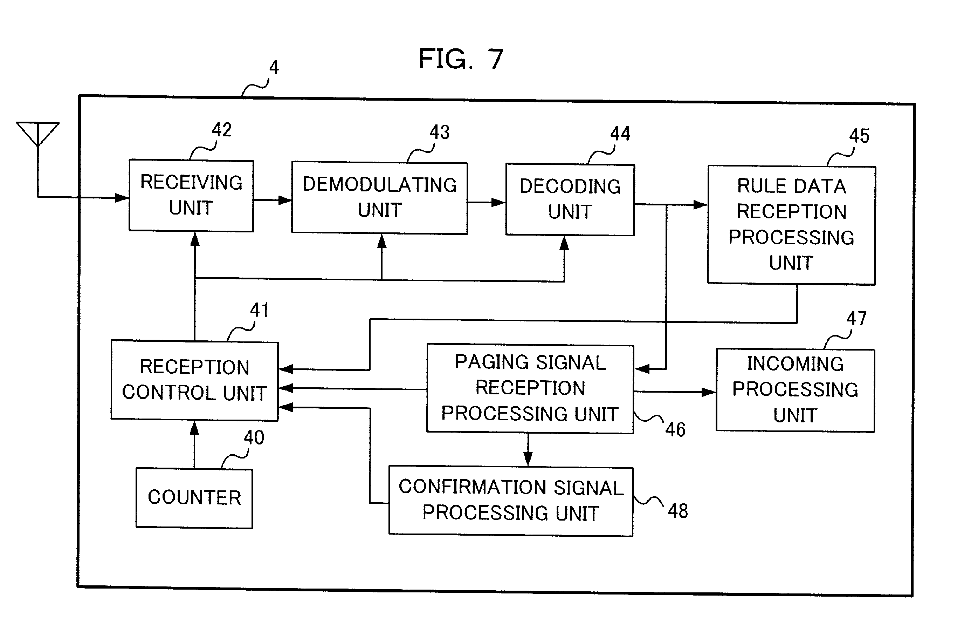

FIG.7 depicts a configuration of the radio communication device of the case when a mobile station 4 in the mobile communication system is used as a radio communication device (a second radio communication device).

The mobile station 4 includes a counter 40, a reception control unit 41, a receiving unit 42, a demodulating unit 43, a decoding unit 44, a rule data reception processing unit 45, a paging signal reception processing unit 46, an incoming processing unit 47, and a confirmation signal processing unit 48.

The mobile station 4 includes the counter 40 used as a timing standard. Based on the timing signal given from the counter 40, the reception control unit 41 controls the receiving unit 42 to perform the intermittent reception processing. Reception timing is timing specified by the rule data obtained by the rule data reception processing unit 45.

The receiving unit 42 whose reception processing is controlled by the reception control unit 41 receives the radio signal transmitted from the base station 3 intermittently and gives a reception result to the demodulating unit 43. The demodulating unit 43 performs demodulation processing on the given reception result, and gives a demodulation result to the decoding unit 44. After the data is decoded by the decoding unit 44 and is given processing such as error correction, the data is given to either the rule data reception processing unit 45 or the paging signal reception processing unit 46 according to a kind of data.

That is, when the rule data is received from the base station 3, the rule data is given to the rule data reception processing unit 45 in order to specify the applied rule. For example, a parameter, such as a period and an offset, used to calculate the intermittent reception timing is given as the rule data to the rule data reception processing unit 25.

The data received by the intermittent reception is given to the paging signal reception processing 46. If the data is a paging signal, the data is given to the incoming processing unit 47, and the mobile station 4 performs communication with the base station 3 necessary for the incoming processing.

If the data received by the intermittent reception is the predetermined signal (C), the reception control unit 41 is controlled so that the receiving unit 21 is controlled to receive a channel in which the rule data is transmitted. For example, if the base station 3 transmits the rule data in a prescribed radio frame, the receiving unit 42 or the like are controlled to receive such a radio frame, and the received new rule data is given to the rule data reception processing unit 45.

Further, when obtaining the paging signal and the predetermined signal (M), the paging signal reception processing unit 46 gives the paging signal and the predetermined signal (M) to the confirmation signal processing unit 48.

The confirmation signal processing unit 48 detects whether or not the predetermined signal (M) is received within the predetermined period (or one time within a number of P paging signal transmissions (P is one or more)). For example, when the confirmation signal processing unit 48 recognizes that the base station 3 transmits the predetermined signal (M) within a period L or detects that the predetermined signal (M) is not received with the period L, the reception control unit 41 is controlled to receive the rule data. When the currently applied rule data is different from the rule data that is newly received, the rule data reception processing unit 45 controls the reception control unit 41 to receive the paging signal at the timing in accordance with the newly received new rule data.

The fact that the predetermined signal (M) is not continuously received a plurality times may be a receiving condition.

"Controlling method related to the rule change"

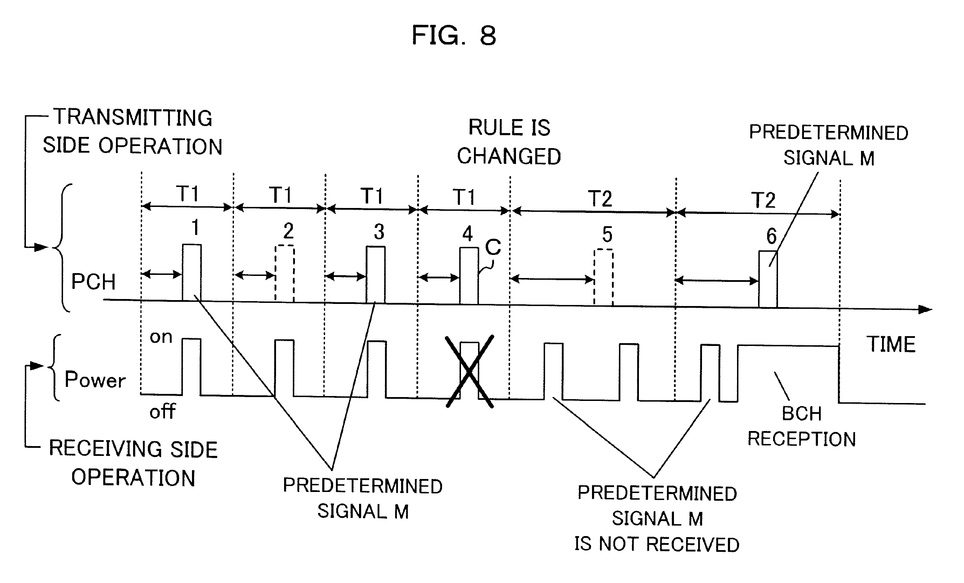

By using Fig.8, description is made of operations of the base station and the mobile station of the case when the rule is changed.

As depicted in the figure, before the rule is changed, the base station 3 recognizes the transmission timing of the paging signal incoming in the period T1 according to the first rule. If there is incoming traffic to the mobile station 4, the paging signal is transmitted at this timing. This case depicts an example of the case when the paging signal is not transmitted before the rule is changed.

The mobile station 4 performs the intermittent reception according to the first rule, and the base station 3 transmits the predetermined signal (M) generated by the confirmation signal generating unit 36 in a predetermined period ($2 \times$T1 in this case) even when the paging signal is not transmitted (see the $1^{st}$ and $3^{rd}$ transmission timing of the PCH depicted in the figure).

Therefore, the mobile station 4 receives the predetermined signal (M) in accordance with the first rule, and the confirmation signal processing unit 48 processes the predetermined signal (M) . That is, it is determined whether or not the predetermined signal (M) is received within the predetermined period (2T1).

In this example, the predetermined signal is received at the $1^{st}$ and $3^{rd}$ transmission timing of the PCH, so that the confirmation signal processing unit 48 does not perform the processing of particularly receiving the BCH, but performs the intermittent reception in accordance with the first rule.

At this time, the base station 3 transmits the predetermined signal (C) at the $4^{th}$ transmission timing of the PCH in order to change the rule. However, it is assumed that the receiving unit 42 of the mobile station 4 could not receive this predetermined signal (C) because of, for example, the effect of the radio environment.

Accordingly, even after the base station 3 switches the timing to transmit the paging signal, the mobile station 4 performs the intermittent reception in accordance with the first rule.

However, the confirmation signal processing unit 48 detects that the predetermined signal (M) (or the paging signal) is not received at the timing when the predetermined signal (M) should be received. (the predetermined signal (M) cannot be continuously received twice in this case).

The confirmation signal processing unit 48 determines that a confirmation condition of the rule data is satisfied, and makes the reception control unit 41 control the receiving unit 42 to receive the BCH.

The mobile station 4 receives the second rule data by receiving the BCH, and the second rule data is input to the rule data reception processing unit 45.

The rule data reception processing unit 45 detects that the stored rule that is currently applied is different from the second rule that is specified by the received second rule data, and instructs the reception control unit 41 to receive the paging signal at the timing specified by the received second rule data.

Therefore, after that, the intermittent reception of the paging signal is performed according to the second rule, and confirmation processing by using the predetermined signal (M) transmitted in the predetermined period L is performed by the confirmation signal processing unit 48.

After the rule is changed, the period L may be changed to a different period L'. The new period L' is preferably transmitted by the BCH. The mobile station 4 receives both the second rule data and the period L' by receiving the BCH, and changes the period to be applied to confirm the reception of the predetermined signal (M) after the rule is changed.

The above described example does not mention about the transmission of information of the existence or nonexistence of the paging signal by the PICH in W-CDMA. However, when the paging signal is transmitted, the existence of the paging signal may be notified by the PICH in advance and received by the mobile station prior to reception of the paging signal or predetermined signal (C), (M). When the paging signal is not transmitted, the nonexistence of the paging signal may be notified by the PICH.

According to the present invention, it is possible to reduce problems that may occur when the period of the intermittent reception is changed.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment (s) of the present invention (s) has (have) been described in detail, it should be understood that the various changes, substitutions, and alterations could be made hereto without departing from the spirit and scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

This application is based upon and claims the benefit of priority of the prior Japanese Patent Application No. 2007-278887, filed on October 26, 2007, the entire contents of which are incorporated herein by reference.

**Claims**

1. A radio communication device that performs intermittent reception according to a timing specified by a first rule, wherein the radio communication device transmits, to another radio communication device, a predetermined signal that gives an opportunity to the other radio communication device to detect a change of a rule to be applied from the first rule to a second rule, the radio communication device comprising:

   a transmitting unit that transmits a radio signal to the other radio communication device; and
   a control unit that controls the transmitting unit to transmit a paging signal at a timing specified by the first rule and a timing specified by the second rule when the paging signal is transmitted after the predetermined signal is transmitted.

2. The radio communication device according to claim 1, wherein after the predetermined signal is transmitted, the control unit controls the transmitting unit to retransmit the predetermined signal to the other radio communication device at a timing specified by the first rule.

3. The radio communication device according to claim 2, wherein retransmission of the predetermined signal that is performed after the predetermined signal was transmitted is performed when a paging signal is not transmitted.

4. A control method in a radio communication system wherein a radio communication device transmits, to another radio communication device, a predetermined signal that gives an opportunity to the other radio communication device to detect a change of a rule to be applied from a first rule to a second rule, the control method comprising:

   transmitting, from the radio communication device, a paging signal at a timing specified by the first rule and a timing specified by the second rule; and
   receiving, by the other radio communication device, the paging signal at the timing specified by the first rule when the predetermined signal was transmitted by the radio communication device to the other radio communication device but not received by the other radio communication device.

5. A radio communication device which transmits a predetermined signal that gives an opportunity to another radio communication device to detect a change of a rule to be applied from a first rule to a second rule, wherein the other radio communication device performs intermittent reception according to a timing specified by the first rule, the radio communication device comprising:

   a transmitting unit that transmits a radio signal to the other radio communication device; and
   a control unit that controls the transmitting unit to transmit, at a timing specified by the first rule, a signal by which the other radio communication device can use to confirm that the first rule was not changed to another rule.

6. A radio communication device that intermittently receives a radio signal, transmitted from another radio communication device that transmits a paging signal at a timing specified by a first rule, according to the timing specified by the first rule, the radio communication device comprising:

   a receiving unit that receives a signal transmitted from the other radio communication device; and
   a control unit that controls the receiving unit to receive a predetermined signal, transmitted from the other radio communication device, that enables the radio communication device to detect that the first rule was not changed, and controls the receiving unit to receive information used to specify a rule, applied by the other radio communication device, as a transmission timing of a paging signal according to a reception state of the predetermined signal.

7. A control method in a radio communication system in which a radio signal transmitted from a first radio communication device that transmits a paging signal at a timing specified by a first rule is intermittently received by a second radio communication device according to the timing specified by the first rule, the control method comprising:

receiving a predetermined signal, transmitted from the first radio communication device, by the second radio communication device at a timing determined by the first rule, wherein the predetermined signal is used to detect that the first rule was not changed; and

receiving information, which is used to specify a rule applied by the first radio communication device for a transmission timing of a paging signal, by the second radio communication device in accordance with a reception state of the predetermined signal.

FIG. 1

TIME

TRANSMITTING
SIDE OPERATION

OLD BCH INFORMATION | RULE IS CHANGED | NEW BCH INFORMATION

BCH

PCH

T1 | T1 | T1 | T2 | T2 | T2 | T2

on
Power
off

RECEIVING SIDE
OPERATION

# FIG. 2

# FIG. 3

EP 2 053 890 A2

FIG. 4

EP 2 053 890 A2

## FIG. 5

TRANSMITTING SIDE OPERATION

RULE IS CHANGED

TIME

OLD BCH INFORMATION → NEW BCH INFORMATION

BCH: | | | | 1 | 2 | 3 | |

T1 | T1 | T1 | T2 | T2 | T2 | T2

PCH: 1 2 C 3 | 4 5 6 C 7 | 8 | 9

Power: on / off

RECEIVING SIDE OPERATION

TIMING IN ACCORDANCE WITH THE RULE THAT IS NOT CHANGED

TIMING IN ACCORDANCE WITH THE RULE THAT IS CHANGED

BCH RECEPTION

EP 2 053 890 A2

## FIG. 6

EP 2 053 890 A2

# FIG. 7

EP 2 053 890 A2

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007278887 A